# EUROPEAN PATENT APPLICATION

(11) **EP 1 962 404 A2**
(43) Date of publication of application: **27.08.2008**
(21) Application number: 07150036.7
(22) Date of filing: 14.12.2007
(51) Int. Cl.: H02J 7/00, B60R 16/02

(54) **Power supply device**

(30) Priority: 24.01.2007 JP 2007013555
(71) Applicant: OMRON CORPORATION, Kyoto-shi, Kyoto 600-8530 (JP)
(72) Inventor: Imamura, Kimihiko, Kyoto-shi Kyoto 600-8530 (JP); Okaniwa, Masakazu, Kyoto-shi Kyoto 600-8530 (JP)
(74) Representative: Wilhelms · Kilian & Partner Patentanwälte

(57) **Abstract**

There is provided a power supply device superior in safely which does not cause a second accident such as an electric shock even if the power cable is broken by chance. The power supply device provided with a power socket having a plurality of power supply terminals for supplying an alternating current supply with a predetermined voltage is provided with judgment means for judging whether or not breakage of a power supply path to the power socket has occurred based on whether or not electrical potentials of the plurality of power supply terminals each changes periodically to a first predetermined electrical potential and a second predetermined electrical potential lower than the first predetermined electrical potential, and blocking means for blocking power supply to the power socket when the breakage of the power supply path has been judged by the judgment means.

## Description

### BACKGROUND OF THE INVENTION

### 1. Field of the Invention

The present invention relates to a power supply device, and in particular to a power supply device used for a vehicle, and for supplying alternating-current power with a predetermined voltage.

### 2. Description of Related Art

Recent years, vehicles such as cars (hereinafter referred to as "vehicles") are attempted to be further improved in usability or convenience, and for example, vehicles equipped with a power socket for alternating voltage so that home electric appliances are available in vehicles are becoming generalized, but some of the home electric appliances consume much more power than in-vehicle electric components, and consequently, measures to overload (overcurrent) are absolutely necessary.

As such measures, for example, a technology (hereinafter referred to as related technology) described in JP-A-9-74666 (patent document 1) is known. In this related technology, a current flowing through an alternating voltage system is detected, and it is arranged that when the detected current exceeds a preset value, occurrence of overload in the alternating voltage system is judged to cut the alternating voltage supply to the power socket.

However, regarding the related technology, although it is advantageous to the extent of the measures to the overload of the alternating voltage system, it is not sufficient regarding the following points, and has room for improvement.

It is assumed that the body of the vehicle is heavily damaged by a traffic accident and the power supply cable connected to the power socket is broken as a case occurring infrequently. In general, this kind of power cable has a structure of covering two coated wires with an insulating outer jacket, and when it is broken with strong force, the two wires are sometimes bared (the conductors are exposed) at the broken section. Incidentally, the electrical potential between the two wires is an alternating voltage generated in the power supply device, and the voltage value is specified by a country or a region. The specified values are, for example, 100V in Japan, 115V in the United States and Canada, 230V in most of the countries in Europe. There is a safely hazard that, in the case in which the potential difference of 100V or more exists as described above, if a crew of the vehicle or a rescuer accidentally touches the two wires in exposed conditions, a second accident such as an electric shock is caused.

### SUMMARY OF THE INVENTION

An object of the present invention is to provide a power supply device superior in safely which does not cause a second accident such as an electric shock even if the power cable is broken by chance.

An aspect of the invention is directed to a power supply device provided with a power socket having a plurality of power supply terminals for supplying an alternating current supply with a predetermined voltage, including judgment means for judging whether or not breakage of a power supply path to the power socket has occurred based on whether or not electrical potentials of the plurality of power supply terminals each changes periodically to a first predetermined electrical potential and a second predetermined electrical potential lower than the first predetermined electrical potential, and blocking means for blocking power supply to the power socket when the breakage of the power supply path has been judged by the judgment means.

Another aspect of the invention is directed to a power supply device provided with a power socket having a plurality of power supply terminals for supplying an alternating current supply with a predetermined voltage, including judgment means for judging whether or not breakage of a power supply path to the power socket has occurred based on whether or not an electrical potential of either one of the plurality of power supply terminals changes periodically to a first predetermined electrical potential and a second predetermined electrical potential lower than the first predetermined electrical potential, and blocking means for blocking power supply to the power socket when the breakage of the power supply path has been judged by the judgment means.

In the present invention, when the breakage is caused in the power supply path (the power supply cable) to the power socket, the power supply to the power socket is blocked. Therefore, even if a human has contact with the conductor section of the power cable exposed by breakage, no secondary accident such as an electric shock is caused.

### BRIEF DESCRIPTION OF THE DRAWINGS

Fig. 1 is an overall system configuration diagram.
Fig. 2 is a distribution diagram including the DC/AC inverter 5.
Figs. 3A and 3B are appearance diagrams of the power socket 8 and the harness 6.
Fig. 4 is a configuration diagram of an output circuit 25 of the DC/AC converter 10 included in the DC/AC inverter 5.
Fig. 5 is an operational matrix chart of the DC/AC inverter 5.
Fig. 6 is a operational conceptual diagram of the output circuit 25 in the three modes (M1 through M3).
Figs. 7A and 7B are diagrams showing the output voltage waveform of the DC/AC inverter 5.
Figs. 8A to 8C are diagrams showing patterns of the combination of two monitored electrical potentials.
Fig. 9 is a schematic diagram of the operational flow in the control section 15.
Fig. 10 is a configuration diagram showing another embodiment.

### DESCRIPTION OF THE PREFERRED EMBODIMENTS

Some embodiments of the invention will hereinafter be explained with reference to the accompanying drawings. It should be noted that specification of various details, actual examples, and exemplifications of numerical values, character strings, or other symbols in the following explanations are nothing more than reference for making the concept of the present invention clear, and it is obvious that the concept of the present invention is not limited by them all or a part of them. Further, regarding well known methods, well known procedures, well known architectures, well known circuit configurations, and so on (hereinafter "well known items"), explanations for the details thereof will be omitted only for the sake of simplification of the explanations, and it is not intended to exclude all or a part of these well known items. Such well known items can be known by those skilled in the art at the time point of application of the present invention, and consequently, are obviously inherent in the explanations below.

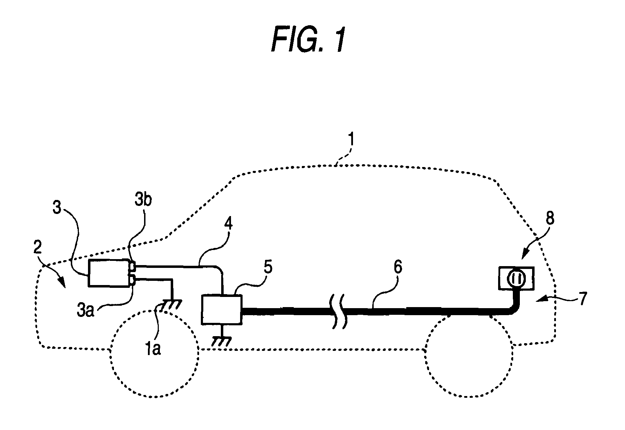

Fig. 1 is an overall system configuration diagram. In this drawing, a negative electrode terminal 3a of a battery 3 installed in an engine compartment 2 of a vehicle 1 is connected to a body 1a of the vehicle 1, and a positive electrode terminal 3b of the battery 3 is connected to a DC/AC inverter 5 disposed, for example, inside a dashboard via a wiring 4. It should be noted that overcurrent handling means such as a fuse can be included along the wiring 4.

The DC/AC inverter 5 converts a direct-current voltage (DC 12V) supplied from the battery 3 into an alternating voltage (assumed to be single-phase 100V) corresponding to the commercial power supply voltage, and outputs the AC 100V to a power socket 8 disposed on, for example, a wall surface of a luggage compartment 7 via a harness 6.

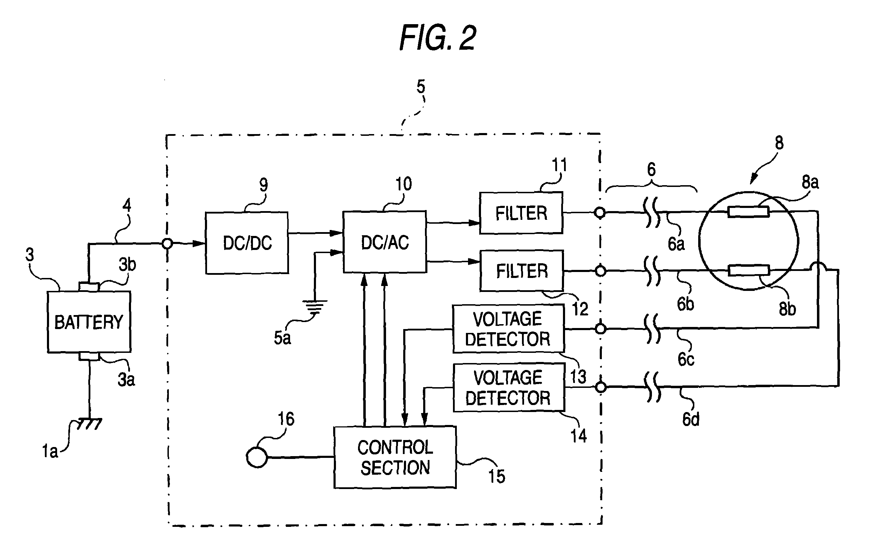

Fig. 2 is a distribution diagram including the DC/AC inverter 5. In the drawing, the DC/AC inverter 5 is configured including a DC/DC converter 9 for stepping-up a direct-current voltage, a DC/AC converter 10 for direct-current/alternating-current conversion, two filters (hereinafter a first filter 11, a second filter 12) for removing an unnecessary signal such as a harmonic component, two voltage detectors (hereinafter, a first voltage detector 13, a second voltage detector 14) for detecting respective terminal voltages (the voltage of one terminal 8a and the voltage of the other terminal 8b) of the power socket 8, a control section 15 for performing a direct-current/alternating-current conversion process of the DC/AC converter 10, a countermeasure process to breakage of harness 6, and so on, and a warning light 16 for giving a warning when the alternating voltage output is stopped.

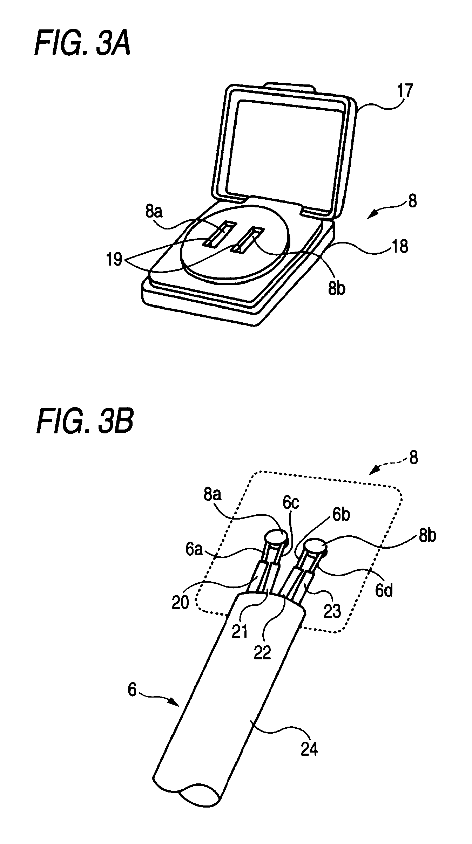

Further, the harness 6 is composed of a first line 6a for connecting the first filter 11 and one terminal 8a of the power socket 8 to each other, a second line 6b for connecting the second filter 12 and the other terminal 8b of the power socket 8 to each other, a third line 6c for connecting the one terminal 8a of the power socket 8 and the first voltage detector 13 to each other, and a fourth line 6d for connecting the other terminal 8b of the power socket 8 and the second voltage detector 14 to each other all covered with a common jacket (see a jacket 24 shown in Fig. 3B).

Figs. 3A and 3B are appearance diagrams of the power socket 8 and the harness 6. In this drawing, the power socket 8 is configured by burying the one terminal 8a and the other terminal 8b inside two parallel holes 19 provided to a main body 18 having an openable/closable lid 17.

Incidentally, the harness 6 has a structure covering each of the four lines (the first through fourth lines 6a through 6d) with insulating coats 20 through 23 and integrating them with a common jacket 24, and further, an end section of each of the first line 6a and the third line 6c is connected to the one terminal 8a of the power socket 8 while an end section of each of the second line 6b and the fourth line 6d is connected to the other terminal 8b of the power socket 8. It should be noted that although in this drawing the connection section between the first through fourth lines 6a through 6d and the one terminal 8a and the other terminal 8b of the power socket 8 is illustrated as if it is in an uncovered condition, this is for the sake of convenience of illustration. It goes without saying that it is electrically isolated from the outside using some measures for safely such as a protective cover or a plastic molding.

Going back again to Fig. 2 and continuing the explanation, the DC/DC converter 9 steps-up DC 12V supplied from the battery 3 to a predetermined direct-current voltage (hereinafter, assumed to DC 100V), and outputs it to the DC/AC converter 10. The DC/AC converter 10 converts the DC 100V into an alternating voltage (hereinafter, assumed to AC 100V) corresponding to the commercial power supply voltage while being controlled by the control section 15, and outputs the AC 100V to the one terminal 8a and the other terminal 8b of the power socket 8 via the two filters 11, 12 and the harness 6.

Here, the DC/AC inverter 5 of the present embodiment is a simplified inverter for outputting a quasi-sine wave having a square-wave shape close to the waveform (a sine wave) of the commercial power supply voltage. Such simplified inverters are used today for a wide variety of purposes including automobile use because of advantages of low price and compact. Therefore, also in the present embodiment, it is decided to use such a simplified inverter as the DC/DC inverter 5, but, this decision has been made taking the advantage of cost-saving into consideration, in view of the concept of the invention, usage of a high performance inverter for outputting a pure sine-wave alternating-current corresponding to the waveform of the commercial power supply voltage is not excluded.

Here, an output operation of the alternating voltage in the DC/AC inverter 5 of the present embodiment will be explained.

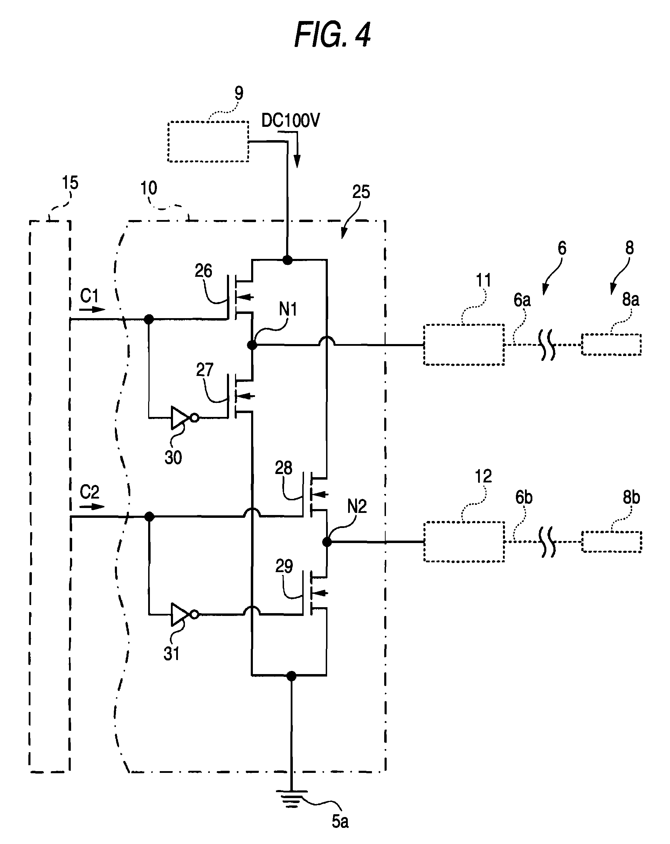

Fig. 4 is a configuration diagram of an output circuit 25 of the DC/AC converter 10 included in the DC/AC inverter 5. In this drawing, the output circuit 25 is provided with four switching elements (hereinafter, first through fourth switching elements 26 through 29) and two logical inversion elements (hereinafter, a first logical inversion element 30, a second logical inversion element 31), the first and second switching elements 26, 27 and the third and fourth switching elements 28, 29 are connected in parallel between the output (DC 100V) of the DC/DC converter 9 and the secondary ground 5a (the secondary ground 5a and the body 1a of the vehicle 1 are electrically isolated from each other) of the DC/AC inverter 5, the first logical inversion element 30 is inserted between a first control signal (C1) output of the control section 15 and the gate of the second switching element 27, the second logical inversion element 31 is inserted between a second control signal (C2) output of the control section 15 and the gate of the fourth switching element 29 to configure the output circuit 25, further, a node N1 between the first switching element 26 and the second switching element 27 is connected to the first filter 11, and a node N2 between the third switching element 28 and the fourth switching element 29 is connected to the second filter 12 to configure the output circuit 25.

According to such a configuration, on/off operations of the four switching elements (the first through fourth switching elements 26 through 29) can be controlled separately in accordance with combinations of the logic of the first control signal (C1) and the second control signal (C2) from the control section 15.

Further, according to each of the combinations, the electrical potential of each of the one terminal 8a and the other terminal 8b of the power socket 8 is varied from a reference potential (hereinafter referred to as Vref) corresponding to the electrical potential of the secondary ground 5a of the DC/AC inverter 5 to the electrical potential corresponding to DC 100V at a predetermined cycle (a cycle in the commercial power supply frequency; e.g., a cycle of 60Hz per second) in a rectangular wave manner, thus an alternating voltage waveform shaped like a quasi-sine wave with a peak-to-peak voltage roughly twice as large as DC 100V can be output. The DC 100V corresponds to the "first predetermined electrical potential, " and the Vref corresponds to the "second predetermined electrical potential" lower than the first predetermined electrical potential as used in the general description of the invention.

Here, the electrical potentials of both of the one terminal 8a and the other terminal 8b of the power socket 8 can be set to the reference potential Vref only by turning on only the second switching element 27 and the fourth switching element 29 of the output circuit 25, and this can be achieved only by setting both of the first control signal (C1) and the second control signal (C2) from the control section 15 to logical low (L). Thus, since the first switching element 26 and the third switching element 28 are turned off while the second switching element 27 and the fourth switching element 29 are turned on, each of the nodes N1, N2 is connected to the secondary ground 5a of the DC/AC inverter 5 via the second switching element 27 or the fourth switching element 29 in the on state, as a result, the electrical potentials of both of the one terminal 8a and the other terminal 8b of the power socket 8 are set to the reference potential Vref.

Further, in order for setting the electrical potential of the one terminal 8a of the power socket 8 to the electrical potential corresponding to the DC 100V and setting the electrical potential of the other terminal 8b of the power socket 8 to the reference potential Vref, it is enough to selectively turn on only the first switching element 26 and the fourth switching element 29 of the output circuit 25, and this can be achieved only by setting the first control signal (C1) from the control section 15 to logical high (H) and the second control signal (C2) from the control section 15 to logical low (L). Thus, since the first switching element 26 and the fourth switching element 29 are turned on while the second switching element 27 and the third switching element 28 are turned off, one node N1 is connected to the output (DC 100V) of the DC/DC converter 9 via the first switching element 26 in the on state, and the other node N2 is connected to the secondary ground 5a of the DC/AC inverter 5 via the fourth switching element 29 in the on state, as a result, the electrical potential of the one terminal 8a of the power socket 8 is set to the electrical potential corresponding to the DC 100V while the electrical potential of the other terminal 8b is set to the reference potential Vref.

Further, in order for setting the electrical potential of the other terminal 8b of the power socket 8 to the electrical potential corresponding to the DC 100V and setting the electrical potential of the one terminal 8a of the power socket 8 to the reference potential Vref, it is enough to selectively turn on only the second switching element 27 and the third switching element 28 of the output circuit 25, and this can be achieved only by setting the first control signal (C1) from the control section 15 to logical low (L) and the second control signal (C2) from the control section 15 to logical high (H). Thus, since the first switching element 26 and the fourth switching element 29 are turned off while the second switching element 27 and the third switching element 28 are turned on, the other node N2 is connected to the output (DC 100V) of the DC/DC converter 9 via the third switching element 28 in the on state, and the one node N1 is connected to the secondary ground 5a of the DC/AC inverter 5 via the second switching element 27 in the on state, as a result, the electrical potential of the other terminal 8b of the power socket 8 is set to the electrical potential corresponding to the DC 100V while the electrical potential of the one terminal 8a is set to the reference potential Vref.

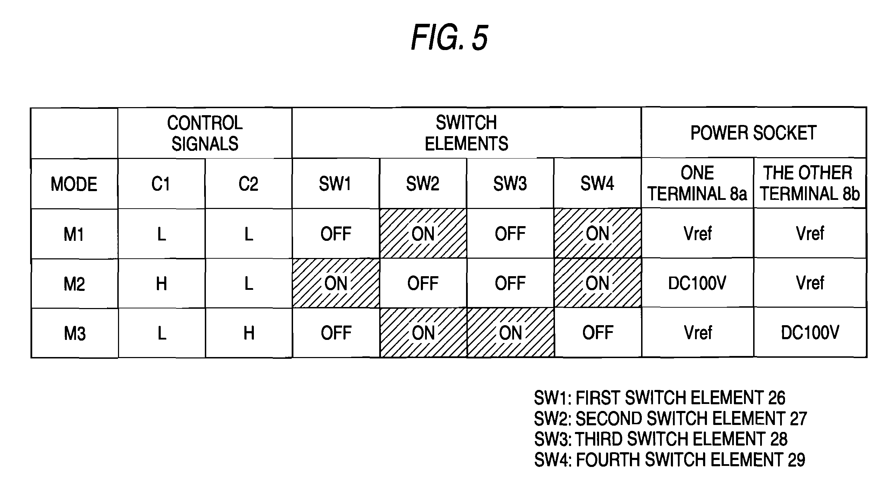

Fig. 5 is an operational matrix chart of the DC/AC inverter 5 summarizing the above explanations. As shown in this drawing, by individually controlling the on/off operations of the four switching elements (the first through the fourth switching elements 26 through 29) in accordance with the combinations of the logic of the first control signal (C1) and the second control signal (C2), the electrical potential of each of the one terminal 8a and the other terminal 8b of the power socket 8 can be varied from the reference potential (hereinafter referred to as Vref) corresponding to the electrical potential of the secondary ground 5a of the DC/AC inverter 5 to the electrical potential corresponding to the DC 100V.

Here, the combinations of the first control signal (C1) and the second control signal (C2) are assumed to be denoted with the three modes (M1 through M3) shown in the drawing. In other words, it is assumed that the combination of C1=C2=L is referred to as a mode M1, the combination of C1=H/C2=L is referred to as a mode M2, and the combination of C1=L/C2=H is referred to as a mode M3.

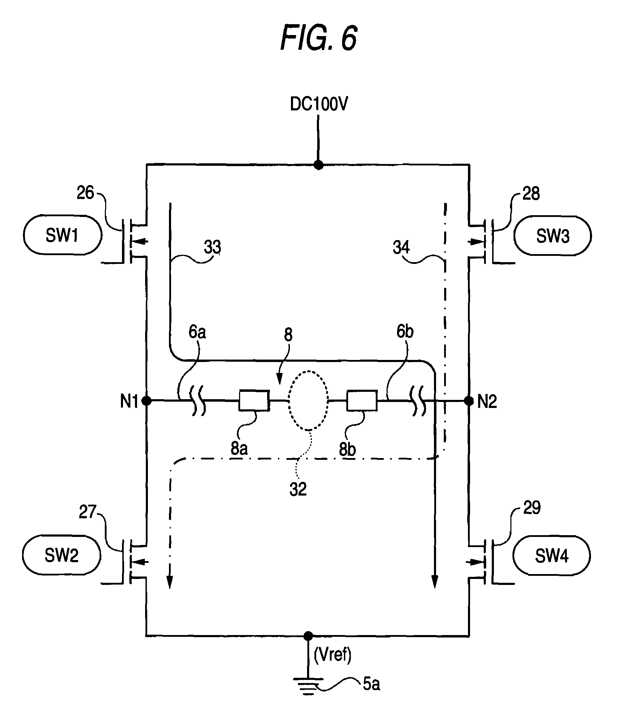

Fig. 6 is a operational conceptual diagram of the output circuit 25 in the three modes (M1 through M3). It should be noted that an arbitrary load 32 is assumed to be connected to the one terminal 8a and the other terminal 8b of the power socket 8. In this drawing, although in the mode M1, an SW1 (the first switching element 26) and an SW3 (the third switching element 28) are turned off, and an SW2 (the second switching element 27) and an SW4 (the fourth switching element 29) are turned on, and consequently the electrical potentials of the one terminal 8a and the other terminal 8b of the power socket 8 are both set to the reference potential Vref, thus no current flows through the load 32, in the case of mode M2 or M3, a current flows through the load 32 by passing through either one of the two paths 33, 34 illustrated with the arrows in the drawing.

Specifically, in the case of the mode M2, the SW1 and the SW4 are turned on, and the SW2 and the SW3 are turned off, and consequently, the electrical potential of the one terminal 8a of the power socket 8 is set to the DC 100V, and the electrical potential of the other terminal 8b is set to the reference potential Vref, as a result, a current in the direction of the DC 100V→the one terminal 8a→the load 32→the other terminal 8b→Vref flows along the path 33. Further, in the case of the mode M3, the SW1 and the S4 are turned off, and the SW2 and the SW3 are turned on, and consequently, the electrical potential of the other terminal 8b of the power socket 8 is set to the DC 100V, and the electrical potential of the one terminal 8a is set to the reference potential Vref, as a result, a current in the direction of the DC 100V→the other terminal 8b→the load 32→the one terminal 8a→Vref flows along the opposite path 34.

As described above, the direction of the path 33 of the current (power supply current) flowing through the load 32 in the mode M2 and the direction of the path 34 of the current (power supply current) flowing through the load 32 in the mode M3 are opposite to each other. Therefore, assuming that the one terminal 8a of the power socket 8 is, for example, a positive terminal, the power supply current flowing through the load 32 along the path 33 becomes a current in the positive half cycle of the alternating voltage, and similarly, the power supply current flowing through the load 32 along the path 34 becomes a current in the negative half cycle of the alternating voltage.

Therefore, the output voltage waveform of the DC/AC inverter 5 of the present embodiment can be described as follows.

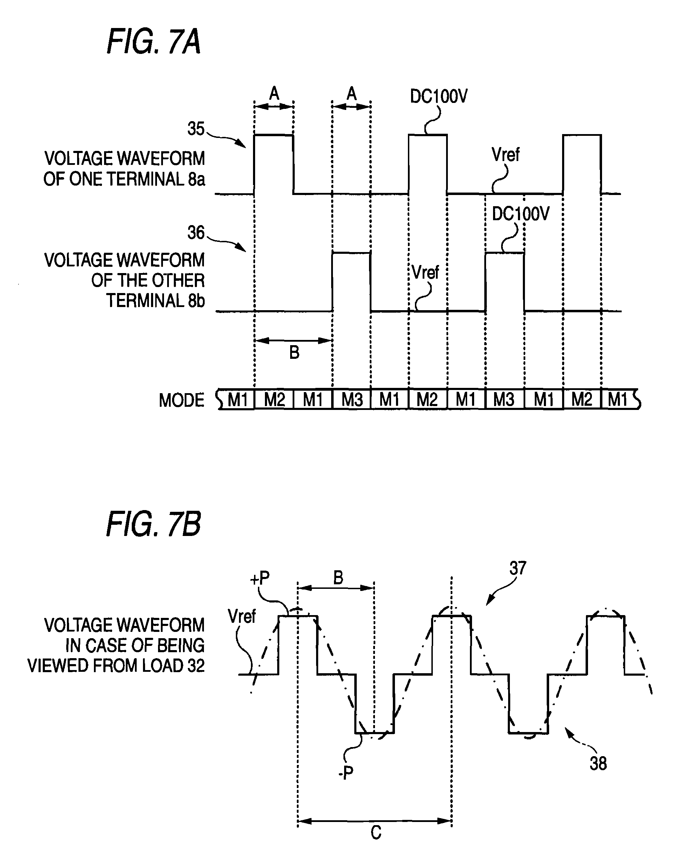

Figs. 7A and 7B are diagrams showing the output voltage waveform of the DC/AC inverter 5. In this drawing, Fig. 7A shows voltage waveforms appear at the one terminal 8a and the other terminal 8b of the power socket 8. Here, it is assumed that the upper waveform 35 of Fig. 7A is the waveform of the one terminal 8a, and the lower waveform 36 is the waveform of the other terminal 8b.

These two waveforms 35, 36 are both have rectangular shapes with the basis of Vref (the second predetermined electrical potential) and the peak of DC 100V (the first predetermined electrical potential), and either of them has a period of DC 100V the length of which is the same length of A. Further, the two waveforms 35, 36 have a phase difference B (a shift on the time axis), and the phase difference B corresponds to a half cycle length of the commercial power supply frequency.

The term in which these two waveforms 35, 36 both stay at Vref corresponds to the mode M1 described above. Further, the term in which only the one waveform 35 is set to the DC 100V corresponds to the mode M2 described above, and the term in which only the other waveform 36 is set to the DC 100V corresponds to the mode M3 described above.

In the term (mode M2) in which only the one waveform 35 is set to the DC 100V, the power supply current flows along the path 33 in the direction of the one terminal 8a→the load 32→the other terminal 8b, further, in the term (mode M3) in which only the other waveform 36 is set to the DC 100V, the power supply current flows along the path 34 in the direction of the other terminal 8b→the load 32→the one terminal 8a.

Therefore, the output voltage of the DC/AC inverter 5 when viewed from the load 32 can be illustrated as an alternating voltage waveform 37 shown in Fig. 7B.

This alternating voltage waveform 37 is a waveform repeated at the same cycle C as the cycle of the commercial power supply frequency in a cyclic manner, and is a stepwise quasi-sine wave having a positive peak (+P) and a negative peak (-P) on the basis of Vref. +P and -P are electrical potentials corresponding substantially to the DC 100V, and the peak-to-peak voltage of the alternating voltage waveform 37 shown in the drawing is substantially identical to the peak-to-peak voltage of the commercial power supply voltage waveform 38 shown for the sake of comparison. Further, rising and falling of the alternating voltage waveform 37 shown in the drawing are also identical substantially to the rising and falling of the commercial power supply voltage waveform 38, and moreover, one cycle length of the alternating voltage waveform 37 shown in the drawing and one cycle length of the commercial power supply voltage waveform 38 are also identical, and consequently, the alternating voltage waveform 37 shown in the drawing is a quasi-sine wave having a shape close to the commercial power supply voltage waveform 38.

According to the DC/AC inverter 5 having the above configuration, it is possible to step-up the DC 12V from the battery 3 to the DC 100V to generate an alternating voltage (AC 100V) corresponding to the commercial power supply voltage using the DC 100V, and by outputting the AC 100V to the power socket 8 via the harness 6, it is possible to operate arbitrary home electric appliances.

Incidentally, assuming that the installation position of the DC/AC inverter 5 is the inside of the dashboard, and the installation position of the power socket 8 is the wall face of the luggage compartment, the harness 6 between the DC/AC inverter 5 and the power socket 8 should be wired around in a long distance from the front to the rear of the vehicle, and further, since the harness 6 is for transmitting a fairly high alternating voltage (AC 100V) compared to the battery voltage (DC 12V), sufficient measures for safely against electric shock accidents must be taken.

Although in this viewpoint, it is preferable to use a strong and robust material for the jacket 24 of the harness 24, there is a limitation in the cost and easiness of handling, and the possibility of breakage caused when strong force is applied to the harness 6 cannot be denied. For example, the case in which the body is largely damaged by a traffic accident occurs infrequently. In such a case, if the damage extends to the harness 6, the breakage of the harness cannot be avoided, the core wire of the harness 6 is exposed, and at worst, there is a concern of causing an electric shock to the human body.

The point of the present embodiment is to quickly stop supplying the alternating voltage in case the harness 6 is broken by chance, thus preventing a secondary accident such as an electric shock accident from occurring.

This point will hereinafter be explained in detail.

Firstly, the harness 6 of the present embodiment has a structural feature in that not only the pair of cables (a first and second cables 6a, 6b) for supplying the alternating voltage, but also a pair of cables (a third and fourth cable 6c, 6d) for monitoring each of the electrical potentials of the one terminal 8a and the other terminal 8b of the power socket 8 is also provided.

Further, the DC/AC inverter 5 of the present embodiment also has a structural features in that two voltage detectors (a first voltage detector 13, a second voltage detector 14) for respectively detecting the two monitoring electrical potentials, namely the electrical potential of the one terminal 8a of the power socket 8 monitored via the third cable 6c and the electrical potential of the other terminal 8b of the power socket 8 monitored via the fourth cable 6d are provided, and that a process of judging whether or not the harness 6 is broken based on the two monitoring electrical potentials, and to stop supplying the alternating voltage at once and issue warning to the crew by putting on a warning light if it is judged that the harness 6 has been broken is executed in the control section 15.

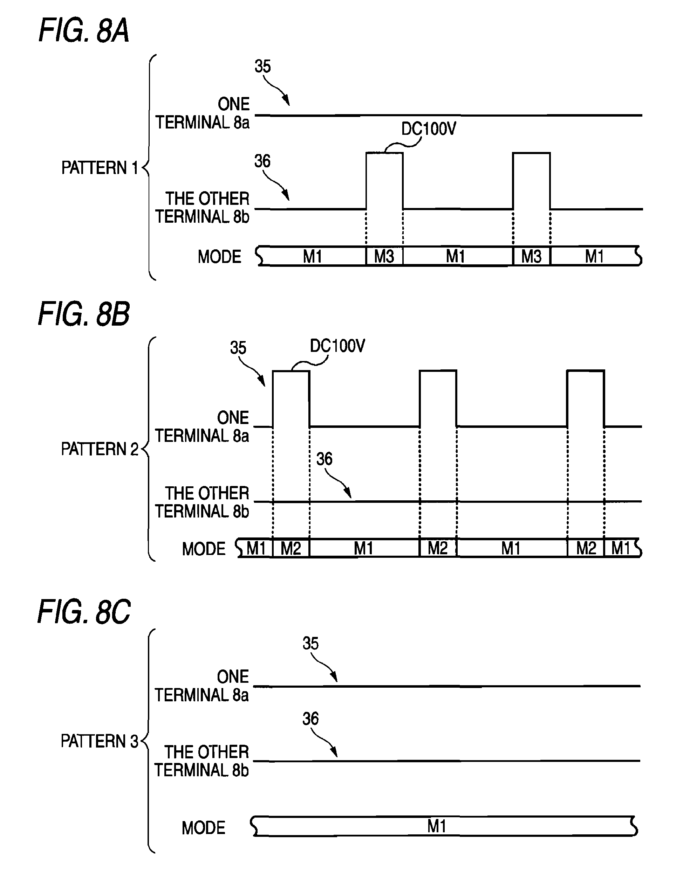

Figs. 8A to 8C are diagrams showing patterns of the combination of the two monitored electrical potentials in a manner according as Fig. 7A. In the drawing, Fig. 8A shows a pattern (hereinafter, pattern 1) in which the electrical potential (the waveform 35) of the one terminal 8a of the power socket 8 monitored via the third cable 6c is kept in a nearly zero voltage, and the electrical potential (the waveform 36) of the other terminal 8b of the power socket 8 monitored via the fourth cable 6d periodically rises to a high voltage (corresponding to the DC 100V) . In this pattern 1, since the electrical potential (the waveform 35) of the one terminal 8a of the power socket 8 is nearly zero, the breakage (or the breakage of the third cable 6c for monitoring) of the first cable 6a of the harness 6 connected to the one terminal 8a can be judged.

Further, Fig. 8B shows a pattern (hereinafter, pattern 2) in which the electrical potential (the waveform 35) of the one terminal 8a of the power socket 8 monitored via the third cable 6c periodically rises to a high voltage (corresponding to the DC 100V), and the electrical potential (the waveform 36) of the other terminal 8b of the power socket 8 monitored via the fourth cable 6d is kept in a nearly zero voltage. In this pattern 2, since the electrical potential (the waveform 36) of the other terminal 8b of the power socket 8 is nearly zero, the breakage (or the breakage of the fourth cable 6d for monitoring) of the second cable 6b of the harness 6 connected to the other terminal 8b can be judged.

Further, Fig. 8C shows a pattern (hereinafter, pattern 3) in which the electrical potential (the waveform 35) of the one terminal 8a of the power socket 8 monitored via the third cable 6c and the electrical potential (the waveform 36) of the other terminal 8b of the power socket 8 monitored via the fourth cable 6d are both kept in a nearly zero voltage. In this pattern 3, since the electrical potentials (the waveforms 35, 36) of the one terminal 8a and the other terminal 8b of the power socket 8 are both nearly zero, the breakage (or the breakage of the third and fourth cables 6c, 6d for monitoring) of the first and second cables 6a, 6b of the harness 6 connected to the one terminal 8a and the other terminal 8b can be judged.

As described above, the electrical potentials of the one terminal 8a and the other terminal 8b of the power socket 8 are monitored, and it can be judged that the breakage occurs in the power supply path (the harness 6) to the power socket 8 when the monitored electrical potentials do not rise periodically to the high voltage (the first predetermined electrical potential corresponding to the DC 100V).

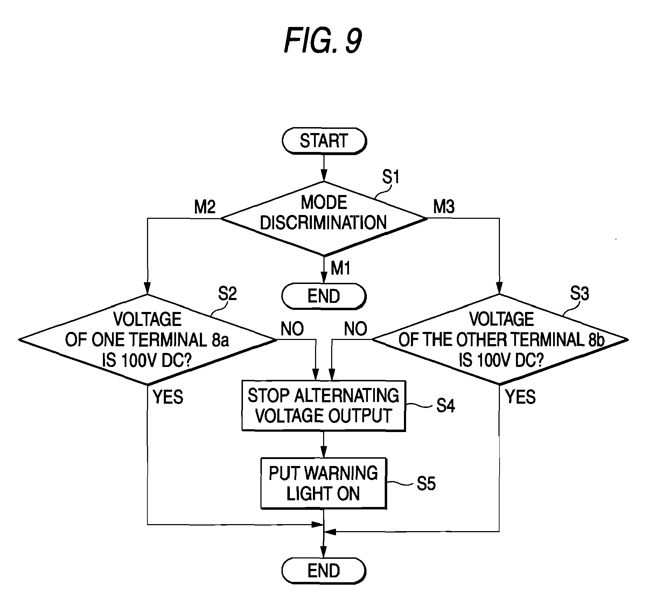

Fig. 9 is a schematic diagram of the operational flow in the control section 15. In this drawing, in the control section 15, firstly, the mode described above (Fig. 5) is judged (step S1). Specifically, whether it is in the modes (M2, M3) in which either one of the SW1 (the first switching element 26) and the SW3 (the third switching element 28) is turned on or in the other mode (M1) is judged, and the processing is terminated if it is in the mode M1, or the processing is branched to the respective modes if it is in the mode M2 or the mode M3.

### <M2 case>

Whether or not the electrical potential (the electrical potential of the one terminal 8a of the power socket 8 monitored via the third cable 6c) detected by the first voltage detector 13 corresponds to the DC 100V is judged (step S2). Then, the processing is terminated if the result of the judgment is "YES, " or if the result of the judgment is "NO," output of the alternating voltage is stopped (step S4), and the processing is terminated after putting on (step S5) the warning light 16 to notify the crew accordingly based on the judgment that the harness 6 has been broken.

### <M3 case>

Whether or not the electrical potential (the electrical potential of the other terminal 8b of the power socket 8 monitored via the forth cable 6d) detected by the second voltage detector 14 corresponds to the DC 100V is judged (step S3). Then, the processing is terminated if the result of the judgment is "YES," or if the result of the judgment is "NO," output of the alternating voltage is stopped (step S4), and the processing is terminated after putting on (step S5) the warning light 16 to notify the crew accordingly based on the judgment that the harness 6 has been broken.

As described above, according to the present embodiment, since it is arranged that each of the electrical potentials of the one terminal 8a and the other terminal 8b of the power socket 8 is detected by the first and second voltage detectors 13, 14 of the DC/AC inverter 5 via the third and fourth cables 6c, 6d, the breakage of the harness 6 is judged by the control section 15 based on the detected electrical potentials, and the alternating voltage supplied from the DC/AC inverter 5 to the power socket 8 via the harness 6 is stopped at once if the breakage of the harness 6 has been judged, a particular advantage that the secondary accident (e.g., an electric shock) can be prevented when, for example, the harness 6 has been broken despite the intention by a traffic accident or other factors can be obtained.

It should be noted that it is obvious that the present invention is not limited to the above embodiment, but includes various expanded examples or modified examples within the technical concept of the invention. For example, even in the case in which three or more terminals for supplying the alternating voltage exist, the wire breakage detection and the power source blocking can be executed similarly to the embodiment described above by monitoring the voltages of all of the terminals. Further, there is a method of monitoring the voltage of one of those terminals.

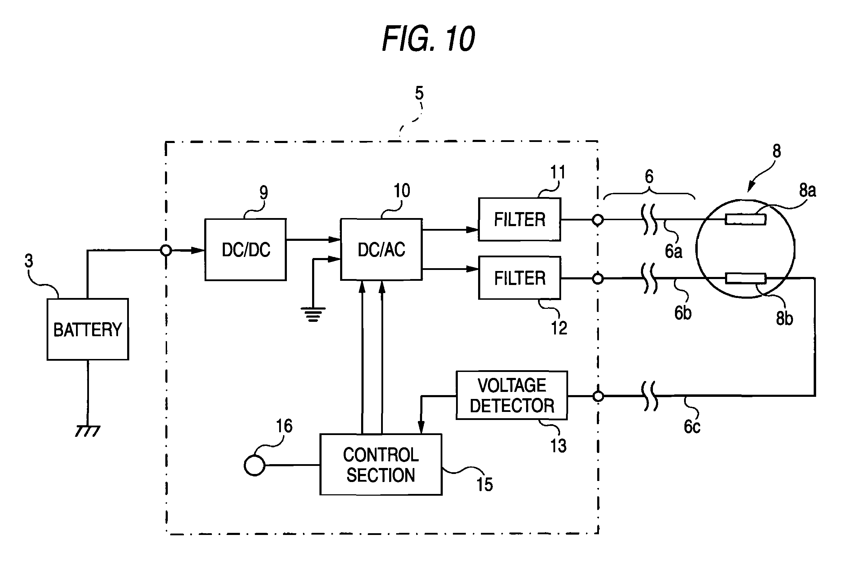

Fig. 10 is a configuration diagram showing another embodiment. The difference from the configuration (Fig. 2) of the preceding embodiment is in that it is arranged to lead only the electrical potential of either one (the other terminal 8b in the drawing) of the terminals of the power socket 8 to the first voltage detector 13 of the DC/AC inverter 5 via one monitor cable (the third cable 6c in the drawing).

Therefore, since in this embodiment, the harness 6 includes three cables, the first through the third cables 6a through 6c, and the DC/AC inverter 5 includes one voltage detector (the first voltage detector 13), the number of cables of the harness 6 and the number of voltage detectors can be reduced, thus an advantage of cost-saving can be obtained.

It should be noted that although in this embodiment the electrical potential of only one (the other terminal 8b) of the terminals of the power socket 8 is monitored, and consequently, the breakage of the cable (the first cable 6a) on the non-monitored side cannot be detected, no particular problem arises. The reason is that it is conceivable that, in the case of the breakage of the harness 6 caused by a traffic accident or the like, not only the second cable 6b on the monitored side but also the first cable 6a on the non-monitored side is broken together therewith with a high probability.

Further, following such a point of view, the cable (the third cable 6c) for monitoring should also be broken together therewith, and even if the cables for monitoring are broken, there is caused no difference in that the result of the judgment in the step S2 or S3 in the operational flow described above (Fig. 9) becomes "NO," thus at least the breakage of the "harness 6" itself is judged, and consequently, no safety problem arises.

## Claims

1. A power supply device provided with a power socket having a plurality of power supply terminals for supplying an alternating current supply with a predetermined voltage, **characterized by** comprising:
judgment means for judging whether or not breakage of a power supply path to the power socket has occurred based on whether or not electrical potentials of the plurality of power supply terminals each changes periodically to a first predetermined electrical potential and a second predetermined electrical potential lower than the first predetermined electrical potential; and
blocking means for blocking power supply to the power socket when the breakage of the power supply path has been judged by the judgment means.

2. A power supply device provided with a power socket having a plurality of power supply terminals for supplying an alternating current supply with a predetermined voltage, **characterized by** comprising:
judgment means for judging whether or not breakage of a power supply path to the power socket has occurred based on whether or not an electrical potential of either one of the plurality of power supply terminals changes periodically to a first predetermined electrical potential and a second predetermined electrical potential lower than the first predetermined electrical potential; and
blocking means for blocking power supply to the power socket when the breakage of the power supply path has been judged by the judgment means.
